# EUROPEAN PATENT APPLICATION

(11) **EP 1 733 781 A1**
(43) Date of publication of application: **20.12.2006**
(21) Application number: 05721022.1
(22) Date of filing: 17.03.2005
(51) Int. Cl.: B01D 53/14, B01D 19/00

(54) **APPARATUS FOR CONCENTRATING METHANE GAS**

(30) Priority: 19.03.2004 JP 2004080944
(71) Applicant: Tsukishima Kikai Co., Ltd., Tokyo 104-0051 (JP)
(72) Inventor: MORI, Takashi, 3360026 (JP); YAMAMOTO, Hakuei, 2701356 (JP); MIYAKE, Haruo, 3320015 (JP); SAWAHARA, Hiromichi, c/o Tsukishima Kikai Co., Ltd, Tokyo; 1040051 (JP)
(74) Representative: Colombet, Alain André
(86) International application number: PCT/JP2005/004835
(87) International publication number: WO 2005/089906

(57) **Abstract**

A methane gas concentrating apparatus including: an absorption unit which supplies biogas containing methane gas and carbon dioxide to the interior of porous hollow fiber, and which dissolves the carbon dioxide from the hollow fiber into liquid absorbent; a stripping deaeration unit into which flows liquid absorbent that issues from the absorption unit, which feeds gas other than carbon dioxide and methane gas into porous hollow fiber, and which recovers carbon dioxide by passing the carbon dioxide in the liquid absorbent in which the carbon dioxide was dissolved by the absorption unit through the hollow fiber; and a vacuum deaeration unit into which flows liquid absorbent that issues from the stripping deaeration unit, and which recovers the carbon dioxide in the liquid absorbent and the gas that was intermixed with the liquid absorbent by the stripping deaeration unit by passing the carbon dioxide and the gas through hollow fiber by reducing pressure inside the porous hollow fiber.

## Description

### TECHNICAL FIELD

The present invention relates to a methane gas concentrating apparatus for removing carbon dioxide from biogas containing methane gas and carbon dioxide that is generated when, for example, conducting biological treatment and the like of organic waste material.

Priority is claimed on Japanese Patent Application No. 2004-080944 filed March 19, 2004, the content of which is incorporated herein by reference.

### BACKGROUND ART

When biological treatment is conducted on organic waste material produced in sewage treatment facilities, food product plants, beer breweries, livestock breeding farms and the like, biogas composed of methane gas, carbon dioxide, hydrogen sulfide and the like is generated.

In recent years, research has been conducted on technologies related to biogas storage methods that conduct, for example adsorptive storage of biogas inside storage layers containing absorbents such as active carbon in order to effectively utilize the pertinent biogas as an energy source.

In order to seek effective utilization of such biogas, it is desirable to remove the carbon dioxide in the biogas, and to concentrate the methane gas for use. As a means for removing carbon dioxide from biogas one may cite, for example, the method of having the biogas pass through an adsorption tower filled with carbon dioxide adsorption agents such as active carbon, zeolite and metal oxide, the method of conducting deaeration by vacuum using a gas separation membrane, the method of conducting separation using porous hollow fibers, and so on. Among these, the separation method using porous hollow fibers has garnered particular attention, because it is capable of selectively removing carbon dioxide, and is both compact and economical.

A carbon dioxide separation apparatus using hollow fiber has serial or parallel arrangement of absorption units which possess hollow fibers contacting a liquid absorbent, which supply biogas containing methane gas and carbon dioxide to this hollow fiber, and which elute the carbon dioxide into the liquid absorbent after it passes through the hollow fiber, as well as deaeration units which possess hollow fiber contacting a liquid absorbent, and which recover the carbon dioxide in the liquid absorbent by passing it through the hollow fiber; the carbon dioxide is separated from the biogas by circulating the liquid absorbent inside a methane gas concentrating apparatus (e.g., see Patent Document 1).

As the deaeration unit, vacuum deaeration units and stripping deaeration units are generally known. A vacuum deaeration unit has hollow fiber that contacts liquid absorbent, and separates the carbon dioxide in the liquid absorbent by reducing pressure inside this hollow fiber by means of a vacuum pump or the like. A stripping deaeration unit has hollow fiber that contacts liquid absorbent, supplies gas other than carbon dioxide and methane gas to this hollow fiber, and recovers the carbon dioxide in the liquid absorbent by passing it through this hollow fiber.
Patent Document 1: Japanese Unexamined Patent Application, First Publication No. 2002-363581

### DISCLOSURE OF THE INVENTION

### PROBLEMS TO BE SOLVED BY THE INVENTION

However, in the case where vacuum deaeration units are adopted, the carbon dioxide in the liquid absorbent is separated by reducing pressure inside the hollow fiber. As the pressure difference inside the hollow fiber is small, and as it is difficult for the carbon dioxide inside the hollow fiber to flow to the ends of the hollow fiber, there is the drawback that it is necessary to have numerous hollow-fiber modules as vacuum deaeration units in order to fully separate the carbon dioxide in the liquid absorbent.

In the case where stripping deaeration units are adopted, for purposes of supplying gas other than carbon dioxide and methane gas to the hollow fiber and separating carbon dioxide by the partial pressure difference between the interior of the hollow fiber and the exterior of the hollow fiber, the carbon dioxide flows more easily to the ends of the hollow fiber than in the case where vacuum deaeration units are adopted, but there is the drawback that the gas other than carbon dioxide and methane gas supplied to the interior of the hollow fiber is dissolved in the liquid absorbent, and the dissolved gas is released in the absorption unit on the biogas side, thereby inhibiting the increase in the methane gas concentration of the biogas.

The present invention solves the aforementioned problems, and its object is to offer a methane gas concentrating device that is able to fully separate the carbon dioxide in the liquid absorbent, and to prevent inhibition of increased methane gas concentration of the biogas.

### MEANS FOR SOLVING THE PROBLEM

In order to solve the aforementioned problems, the present invention is a methane gas concentrating apparatus including: an absorption unit which supplies biogas containing methane gas and carbon dioxide to an interior of a porous hollow fiber, and which dissolves the carbon dioxide from the hollow fiber into a liquid absorbent; a stripping deaeration unit into which flows liquid absorbent that issues from the absorption unit, which feeds gas other than carbon dioxide and methane gas into porous hollow fiber, and which recovers carbon dioxide by passing the carbon dioxide in the liquid absorbent in which the carbon dioxide was dissolved by the absorption unit through the hollow fiber; and a vacuum deaeration unit into which flows liquid absorbent that issues from the stripping deaeration unit, and which recovers the carbon dioxide in the liquid absorbent and the gas that was intermixed with the liquid absorbent by the stripping deaeration unit by passing the carbon dioxide and the gas through hollow fiber by reducing pressure inside the porous hollow fiber.

According to the present invention, the carbon dioxide dissolved in the liquid absorbent by the absorption unit is largely recovered by the stripping deaeration unit. In addition, the carbon dioxide that could not be recovered by the stripping deaeration unit and the gas dissolved in the liquid absorbent by the stripping deaeration unit are recovered by the vacuum deaeration unit. By this means, the carbon dioxide in the liquid absorbent can be fully separated, and it is possible to prevent the dissolved gas from flowing to the biogas side in the absorption unit when gas other than carbon dioxide and methane gas are dissolved in the liquid absorbent.

In the present invention, it is also acceptable to provide a liquid absorbent supply device for supplying liquid absorbent is provided between the stripping deaeration unit and the vacuum deaeration unit, and the liquid absorbent supply device is provided with a water intake tank and a supply unit for supplying liquid absorbent to the water intake tank.

According to the present invention, it is possible to respond to evaporation and diminishment of the liquid absorbent by supplying liquid absorbent from the liquid absorbent supply device, release the carbon dioxide in the liquid absorbent that has flowed to the liquid absorbent supply device from the stripping deaeration unit by stimulation during supply of the liquid absorbent to the water intake tank from the supply unit (for example, the liquid absorbent is supplied in a state where the supply unit and water intake tank are at variance, and the liquid absorbent is spattered), and separate the carbon dioxide in the liquid absorbent.

In the present invention, it is also acceptable to use air as the gas supplied by the stripping deaeration unit, to use water as the liquid absorbent, and to provide a sterilization unit for sterilizing the liquid absorbent by hypochlorite.

According to the present invention, with the sterilization unit, it is possible to prevent the propagation of microbes in the liquid absorbent by hypochlorite, and to prevent microbes from adhering to the absorption unit, deaeration unit and so on, and inhibiting the concentration of methane gas.

In the present invention, it is also acceptable to use hollow-fiber modules as the stripping deaeration unit, vacuum deaeration unit and absorption unit, where this hollow-fiber module includes: a liquid absorbent inlet and gas outlet provided in one side of the hollow-fiber module main body; a liquid absorbent outlet and gas inlet provided in the other side of the hollow-fiber module main body; a plurality of hollow fibers disposed so as to extend through the interior of the hollow-fiber module main body in the longitudinal direction, whereby incoming gas from the gas inlet transits the interior, and exits from the gas outlet; a pipe that is disposed so as to extend through the interior of the hollow-fiber module main body in the longitudinal direction, and that discharges incoming liquid absorbent from the liquid absorbent inlet into the interior of the hollow-fiber module main body, or takes in outgoing liquid absorbent; and a baffle plate that is provided inside the hollow-fiber module main body, that obstructs the flow of liquid absorbent inside the hollow-fiber module main body, and that causes the liquid absorbent discharged from the pipe to flow in a direction perpendicular to the longitudinal direction of the hollow fiber and to contact the hollow fiber.

According to the present invention, as the liquid absorbent that enters from the liquid absorbent inlet flows in a direction perpendicular to the longitudinal direction of the hollow fiber and contacts the hollow fiber, it is possible to improve carbon dioxide separation efficiency in the absorption unit or deaeration unit, reduce the number of hollow-fiber modules in the absorption unit or deaeration unit, and simplify and reduce the size of the absorption unit or deaeration unit.

### ADVANTAGEOUS EFFECTS OF THE INVENTION

According to the present invention, the carbon dioxide dissolved in the liquid absorbent by the absorption unit is largely recovered by the stripping deacration unit. Moreover, the carbon dioxide that cannot be recovered by the stripping deaeration unit and the gas that becomes intermixed with the liquid absorbent by the stripping deaeration unit are recovered by the vacuum deaeration unit. By this means, the carbon dioxide in the liquid absorbent can be fully separated, and even when gas other than carbon dioxide and methane gas becomes intermixed in the liquid absorbent, it is possible to prevent the intermixed gas from flowing to the biogas side in the absorption unit, and prevent inhibition of increased methane gas concentration of the biogas.

### BRIEF DESCRIPTION OF THE DRAWINGS

FIG. 1 is a drawing that shows the methane gas concentrating apparatus of one embodiment of the present invention.
FIG. 2 is a drawing that shows the hollow-fiber module of one embodiment of the present invention.
FIG. 3 is a drawing that shows the flow of liquid absorbent and gas inside the hollow-fiber module of one embodiment of the present invention.

### DESCRIPTION OF THE REFERENCE SYMBOLS

- 1:: methane gas concentrating apparatus
- 2:: absorption unit
- 3:: stripping deaeration unit
- 4:: liquid absorbent supply device
- 5:: vacuum deaeration unit
- 10:: water intake tank
- 11:: supply unit
- 16:: hollow-fiber module
- 17:: hollow-fiber module main body
- 24:: hollow fiber
- 25:: pipe
- 27:: micropore
- 28:: baffle plate
- 33:: circulation means

### BEST MODE FOR CARRYING OUT THE INVENTION

An embodiment of the present invention will be described below with reference to drawings.

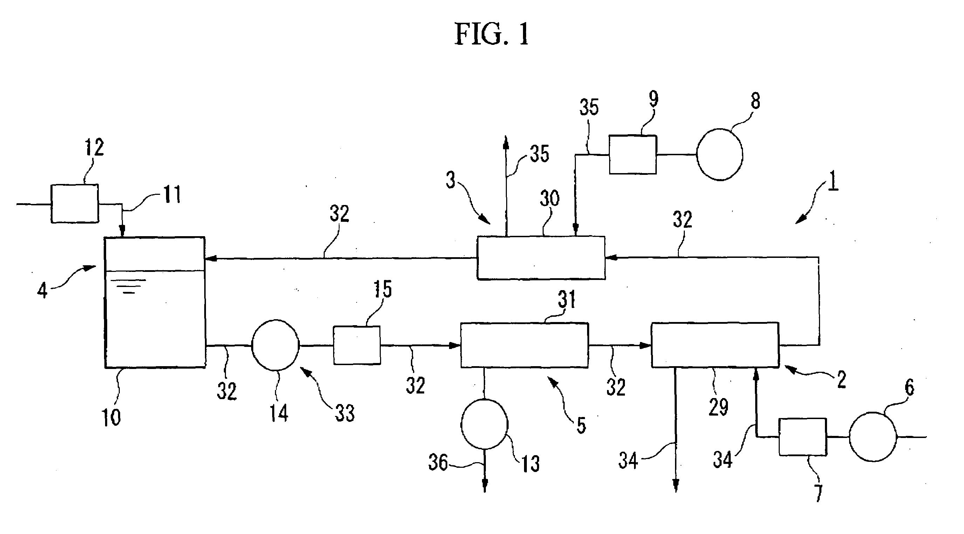

FIG. 1 is a drawing that shows a methane gas concentrating apparatus 1 of one embodiment of the present invention.

The methane gas concentrating apparatus 1 of one embodiment of the present invention includes an absorption unit 2, stripping deaeration unit 3, liquid absorbent supply device 4, vacuum deaeration unit 5, and circulation means 33.

The absorption unit 2 is supplied with biogas containing methane gas and carbon dioxide, preferentially dissolves the carbon dioxide into liquid absorbent, and raises the methane gas concentration of the biogas. The absorption unit 2 is provided with an absorption module 29 which is the body of the absorption unit, a blower 6 that feeds biogas as raw material gas to the absorption module 29, a filter 7 that filters and removes impurities in the biogas, and a pipeline 34 through which the biogas flows. The absorption module 29 has hollow fiber that contacts the liquid absorbent, supplies biogas containing methane gas and carbon dioxide to this hollow fiber, dissolves the carbon dioxide from the hollow fiber into the liquid absorbent, and concentrates, purifies and extracts the methane gas.

The specific configuration of the absorption module 29 and the operations of the absorption module 29 are described below.

The stripping deaeration unit 3 receives the inflow of liquid absorbent that is discharged from the absorption unit 2, is supplied with gas other than carbon dioxide and methane gas, and recovers the carbon dioxide in the liquid absorbent. The stripping deaeration unit 3 is provided with a stripping module 30 as the body of the stripping deaeration unit, a blower 8 for feeding gas other than carbon dioxide and methane gas to the stripping module 30, a filter 9 for filtering and removing impurities in the gas, and a gas pipeline 35 through which gas other than carbon dioxide and methane gas flows. The stripping module 3 has hollows fiber that contacts the liquid absorbent, supplies gas other than carbon dioxide and methane gas to this hollow fiber, and recovers the carbon dioxide in the liquid absorbent through this hollow fiber.

The specific configuration of the stripping module 30 and the operations of the stripping module 30 are described below.

The liquid absorbent supply apparatus 4 serves to supply liquid absorbent. The liquid absorbent supply apparatus 4 is provided with a water intake tank 10, a supply unit 11 that supplies liquid absorbent to this water receiving tank, and a filter 12 that removes impurities from the liquid absorbent that is supplied.

The vacuum deaeration unit 5 takes in the liquid absorbent discharged from the stripping deaeration unit 3 via the supply of liquid absorbent by the liquid absorbent supply device 4, and decompresses and recovers the carbon dioxide in the liquid absorbent and the gas intermixed in the liquid absorbent by the stripping deaeration unit 3, but it does not blow gas into the hollow fibers. The vacuum deaeration unit 5 is provided with a vacuum deaeration module 31, vacuum pump 13 for reducing pressure inside the hollow fiber of the vacuum deaeration module 31, and exhaust pipeline 36 which, after recovery of the carbon dioxide that could not be recovered by the stripping deaeration unit 3 and the gas dissolved in the liquid absorbent by the stripping deaeration unit 3, discharges these gases (releases them into the atmosphere or conveys them to a treatment facility).

The specific configuration of the vacuum deaeration module 31 and the operations of the vacuum deaeration module 31 are described below.

The circulation means 33 is provided with a pump 14 and piping 32. The pump 14 feeds the liquid absorbent supplied by the liquid absorbent supply unit 4 to the vacuum deaeration unit 5 via the filter 15.

The piping 32 is a pipeline which circulates the liquid absorbent that issues from the pump 14 in the order of the vacuum deaeration unit 5, the absorption unit 2, the stripping deaeration unit 3, the liquid absorbent supply unit 4, the vacuum deaeration unit 5, and the absorption unit 2.

In order to prevent the propagation of microbes in the liquid absorbent and the occurrence of blockages inside the piping 32 and the respective modules through which the liquid absorbent circulates, a sterilization unit (not illustrated in the drawings) is provided at any point along the circulation path of the liquid absorbent. With respect to the sterilization conducted by this sterilization unit, sterilization by hypochlorite is particularly effective in the case where the liquid absorbent is water, and the gas that is fed into the stripping deaeration unit 3 is air. As the employed chemical, sodium hypochlorite, potassium hypochlorite, and chlorinated isocyanuric acid may be used. Of these, use of chlorinated isocyanuric acid is preferable. It is preferable that the residual chlorine concentration (concentration in the liquid absorbent) be 0.1 to 2.0 ppm. With respect to this concentration, higher concentrations will have a greater sterilization effect, but when concentration is high, there is risk of deterioration of the material of the hollow-fiber modules.

As the raw material gas used in the methane gas concentrating apparatus 1, various types of gas containing methane gas and carbon dioxide may be used. Typically, biogas produced when conducting biological treatment of organic waste material is used. In addition to methane gas and carbon dioxide, this type of gas also contains gaseous components such as nitrogen and hydrogen sulfide. Of these, it is desirable to remove the hydrogen sulfide in advance by a desulfurization tower (not illustrated in the drawings). As a means for removing the hydrogen sulfide in the biogas, there is the dry desulfurization method and the wet desulfurization method. As to the dry desulfurization method, the molded desulfurizing agent type is often used. With respect to the molded desulfurizing agent type, molded desulfurizing agents in pellet form such as iron powder and clay are packed into the desulfurization tower, and brought into contact with the biogas, after which the used desulfurizing agents are extracted and disposed of. As to the wet desulfurization method, there is the water washing type, alkali washing type, and chemical fluid regeneration type. Of these, with respect to the water washing type, the biogas is brought into counterflow contact with sewage treatment water in the case of sewage treatment, or with well water, industrial water or municipal tap water in the case of other treatment facilities. The temperature and pressure during desulfurization may remain unchanged from the time of biogas generation, and are not subject to any particular limitations.

As the liquid absorbent used in the methane gas concentrating apparatus 1, one may use water such as industrial water, sewage treatment water and ion-exchanged water, inorganic alkaline aqueous solutions such as NaOH and KOH, or organic alkaline aqueous solutions. In the embodiment of the present invention, as the liquid absorbent is circulated for use, it is possible to reduce the amount of consumption of liquid absorbent.

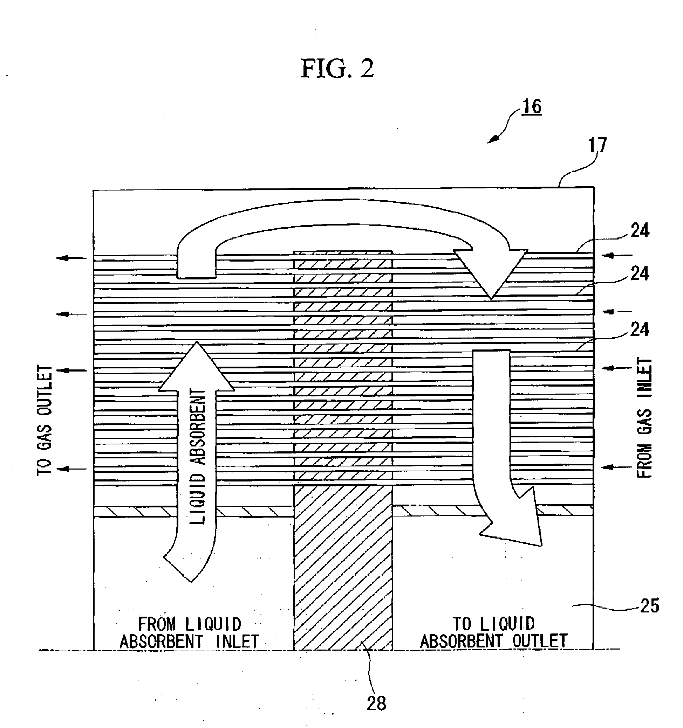

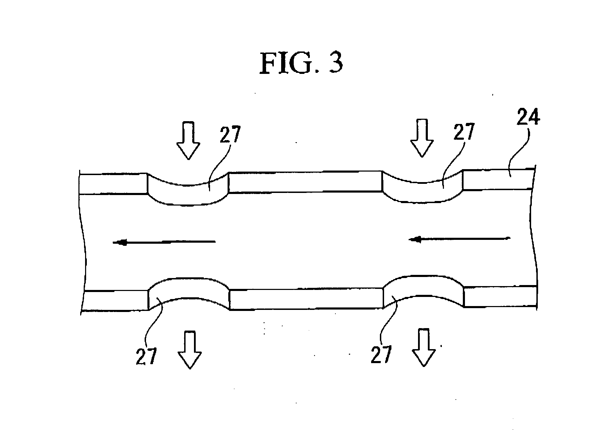

Next, the detailed structure of the hollow-fiber modules 16 used as the absorption module 29, stripping module 30, and vacuum deaeration module 31 is described with reference to FIG. 2 and FIG. 3.

The hollow-fiber module 16 is provided with a hollow-fiber module main body 17, liquid absorbent inlet (not illustrated) and liquid absorbent outlet (not illustrated), gas inlet (not illustrated) and gas outlet (not illustrated), multiple hollow fibers 24, pipe 25, and baffle plate (plate for obstructing direct progression of a liquid absorbent) 28.

It is preferable that the hollow-fiber module main body 17 be cylindrical. The liquid absorbent inlet and gas outlet are provided in one side of the hollow-fiber module main body 17. The liquid absorbent outlet and gas inlet are provided in the other side of the hollow-fiber module main body 17. The hollow fiber 24 is disposed so as to extend in the longitudinal direction inside the hollow-fiber module main body 17 in a state where its multiple strands are bundled together. It is preferable that the pipe 25 be positioned at the center inside the hollow-fiber module main body 17. One end constitutes the liquid absorbent inlet 19; the other end constitutes the liquid absorbent outlet 21. Multiple pores (not illustrated) are formed on the circumferential part of the pipe 25 so as to diffuse the liquid absorbent. The baffle plate 28 is disposed at the center in the longitudinal direction inside the hollow-fiber module main body 17, with space between it and the inner circumferential face of the hollow-fiber module main body 17. This baffle plate 28 obstructs the flow of the liquid absorbent, and contacts the liquid absorbent perpendicular to the hollow fiber.

The gas that enters from the gas inlet transits the multiple hollow fibers 24 inside the hollow-fiber module main body 17, and is discharged from the gas outlet.

When the liquid absorbent is discharged from the pipe 25, and when it enters the pipe 25, it flows in a direction that is approximately orthogonal to the longitudinal direction of the hollow fiber 24, and contacts the hollow fiber 24. As the hollow fiber 24, porous hollow fiber made from hydrophobic synthetic resin is used, and the liquid absorbent does not enter into the hollow fiber 24.

As a result of the liquid absorbent flowing in a direction that is orthogonal to the longitudinal direction of the hollow fiber 24, the flow of the liquid absorbent can be made uniform compared to the case where treatment is conducted in the counterflow direction. Consequently, it is possible to improve carbon dioxide removal efficiency, reduce the number of hollow-fiber modules 16 required for concentrating methane in a fixed quantity of gas, and simplify and reduce the size of the methane concentrating apparatus.

Here, in the case where the hollow-fiber module 16 is used as the absorption module 29, when biogas flows into the hollow fiber in a state where liquid absorbent exists inside the hollow-fiber module main body 17, as the carbon dioxide has a higher solubility relative to water than the other gaseous components, the carbon dioxide disperses and dissolves in the liquid absorbent through the micropores 27 of the hollow fiber 24 in larger quantities than the other gaseous components.

In the case where the hollow-fiber module 16 is used as the stripping module 30, when gas other than carbon dioxide and methane gas flows into the hollow fiber 24 in a state where liquid absorbent exists inside the hollow-fiber module 17, the carbon dioxide in the liquid absorbent enters into the hollow fiber 24 through the micropores 27 of the hollow fiber 24 due to the difference in partial pressure between the interior of the hollow fiber 24 and the exterior of the hollow fiber 24. By this means, it is possible to recover the carbon dioxide in the liquid absorbent through the hollow fiber 24.

In the case where the hollow-fiber module 16 is used as the vacuum deaeration module 31, pressure is reduced inside the hollow fiber in a state where liquid absorbent exists inside the hollow-fiber module main body 17. By this means, it is possible to recover through the hollow fiber 24 the carbon dioxide in the liquid absorbent that was not recovered by the stripping deaeration unit and the gas dissolved in the liquid absorbent by the stripping deaeration unit.

Next, a description is given of the operations of the methane gas concentrating apparatus of one embodiment of the present invention.

The biogas that serves as the raw material gas flows into the absorption unit 2 via the filter 7, and liquid absorbent also flows into the absorption unit 2. The carbon dioxide in the biogas is dispersed and dissolved in the liquid absorbent through the micropores 27 of the hollow fiber 24, the methane gas in the biogas is concentrated, and is extracted as purified gas. The liquid absorbent in which the carbon dioxide is dissolved if fed into the stripping deaeration unit 3 through the piping 22. In addition, gas other than carbon dioxide and methane gas is fed into the stripping deaeration unit 3 by the blower 8 via the filter 9. By this means, the carbon dioxide in the liquid absorbent is taken into the hollow fiber 24 through the micropores 27 of the hollow fiber 24, and is then discharged.

The liquid absorbent discharged from the stripping deaeration unit 3 flows into the water intake tank 10 of the liquid absorbent supply device 4 through the piping 32 in a state where it contains the carbon dioxide that could not be taken in by the stripping deaeration unit 3 and the gas dissolved by the stripping deaeration unit 3. Liquid absorbent is then supplied from the liquid absorbent supply device 4. In addition, the gas dissolved by the stripping deaeration unit 3 and the carbon dioxide can be partially released by stimulation during supply of the liquid absorbent to the water intake tank from the supply unit 11 (for example, liquid absorbent is supplied in a state where the supply unit 11 and water intake tank 10 are at variance, and the liquid absorbent is spattered).

The liquid absorbent that issues from the liquid absorbent supply device 4 is pushed out by the pump 14 through the piping 32, and flows into the vacuum deaeration unit 5 via the filter 15. In the vacuum deaeration unit 5, due to the reduced pressure created inside the hollow fiber 24 by the vacuum pump 13, the carbon dioxide in the liquid absorbent and the gas dissolved in the liquid absorbent by the stripping deaeration unit 3 are taken into the hollow fiber 24 through the micropores 27 of the hollow fiber 24, and are then discharged.

The liquid absorbent that issues from the vacuum deaeration unit 5 again flows into the absorption unit 2.

The liquid absorbent is circulated inside the methane gas concentrating apparatus in the above manner.

While preferred embodiments of the invention have been described and illustrated above, it should be understood that these are exemplary of the invention, and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### INDUSTRIAL APPLICABILITY

The present invention may be suitably used to effectively utilize biogas generated during biological treatment of organic waste material and the like as an energy source, and to effectively utilize it as a chemical industrial material employed in hydrogen manufacture, high-function carbon material manufacture, and so on.

## Claims

1. A methane gas concentrating apparatus comprising:
an absorption unit which supplies biogas containing methane gas and carbon dioxide to an interior of a porous hollow fiber, and which dissolves the carbon dioxide from the hollow fiber into a liquid absorbent;
a stripping deaeration unit into which flows liquid absorbent that issues from the absorption unit, which feeds gas other than carbon dioxide and methane gas into porous hollow fiber, and which recovers carbon dioxide by passing the carbon dioxide in the liquid absorbent in which the carbon dioxide was dissolved by the absorption unit through the hollow fiber; and
a vacuum deaeration unit into which flows liquid absorbent that issues from the stripping deaeration unit, and which recovers the carbon dioxide in the liquid absorbent and the gas that was intermixed with the liquid absorbent by the stripping deaeration unit by passing the carbon dioxide and the gas through hollow fiber by reducing pressure inside the porous hollow fiber.

2. A methane gas concentrating apparatus according to claim 1, wherein
a liquid absorbent supply device for supplying liquid absorbent is provided between the stripping deaeration unit and the vacuum deaeration unit, and the liquid absorbent supply device is provided with a water intake tank and a supply unit for supplying liquid absorbent to the water intake tank.

3. A methane gas concentrating apparatus according to claim 1, wherein
air is used as the gas supplied by the stripping deaeration unit, water is used as the liquid absorbent, and a sterilization unit is provided for sterilizing the liquid absorbent by hypochlorite.

4. A methane gas concentrating apparatus according to claim 1, using hollow-fiber modules as the stripping deaeration unit, the vacuum deaeration unit and the absorption unit, wherein the hollow-fiber module comprises:
a liquid absorbent inlet and gas outlet provided in one side of the hollow-fiber module main body;
a liquid absorbent outlet and gas inlet provided in the other side of the hollow-fiber module main body;
a plurality of hollow fibers disposed so as to extend through an interior of the hollow-fiber module main body in the longitudinal direction, whereby incoming gas from the gas inlet transits the interior, and exits from the gas outlet;
a pipe that is disposed so as to extend through the interior of the hollow-fiber module main body in the longitudinal direction, and that discharges incoming liquid absorbent from the liquid absorbent inlet into the interior of the hollow-fiber module main body, or takes in the outgoing liquid absorbent; and
a baffle plate that is provided inside the hollow-fiber module main body, that obstructs the flow of liquid absorbent inside the hollow-fiber module main body, and that causes the liquid absorbent discharged from the pipe to flow in a direction perpendicular to the longitudinal direction of the hollow fiber and to contact the hollow fiber.
